(19)

Europäisches
Patentamt
European
Patent Office
Office européen
des brevets

(11) **EP 4 177 787 A1**

(12) # EUROPEAN PATENT APPLICATION
published in accordance with Art. 153(4) EPC

(43) Date of publication:
**10.05.2023 Bulletin 2023/19**

(21) Application number: **21838356.0**

(22) Date of filing: **30.06.2021**

(51) International Patent Classification (IPC):
*G06K 7/00* (2006.01)

(86) International application number:
**PCT/CN2021/103774**

(87) International publication number:
**WO 2022/007686 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2020 CN 202010638856**

(71) Applicants:
• **713 Research Institute of China
Shipbuilding Industry Corporation
Zhengzhou, Henan 450000 (CN)**
• **CSIC Haiwei Zhengzhou High Tech Co., Ltd.
Zhengzhou, Henan 450000 (CN)**

(72) Inventors:
• **LI, Shiran**
**Zhengzhou, Henan 450000 (CN)**
• **GAO, Zhihua**
**Zhengzhou, Henan 450000 (CN)**
• **JIA, Yupeng**
**Zhengzhou, Henan 450000 (CN)**
• **WANG, Jianying**
**Zhengzhou, Henan 450000 (CN)**
• **ZHU, Xiangyu**
**Zhengzhou, Henan 450000 (CN)**
• **JIN, Chengxue**
**Zhengzhou, Henan 450000 (CN)**
• **WANG, Wangqiu**
**Zhengzhou, Henan 450000 (CN)**

(74) Representative: **Cabinet Beau de Loménie
158, rue de l'Université
75340 Paris Cedex 07 (FR)**

(54) **SPATIAL-TEMPORAL TRACKING BINDING SYSTEM AND METHOD FOR LUGGAGE TRAY**

(57) Binding system and method for space-time tracking of a baggage pallet, comprises an electronic reader fixed on a baggage tray, an electronic identification reader disposed at a conveyor belt, a first sensing device of a belt side part disposed between the electronic identification reader and the entrance of an X-ray machine, and a second sensing device of a belt side part disposed at the front end of an imaging area inside of the X-ray machine. When baggage tray N is conveyed on the belt, the electronic identification reader identifies the electronic reader on the baggage tray and sends identified tray information to a processor, and when detecting the baggage tray N, the first sensing device sends a signal to the processor to record the signal as record one; when detecting the baggage tray N, the second sensing device sends a signal to the processor to record the signal as record two; and the processor performs a determination according to information of record one and record two, and binds imaging in the imaging area of the X-ray machine and the number of the baggage tray N. According to the present invention, the probability of abnormal tracking binding is reduced, and the circumstance in which adjacent baggage trays are wrongly bound and serially bound is avoided.

FIG.1

## Description

## TECHNICAL FIELD

The present disclosure relates to the field of information technology, in particular to a binding method for space-time tracking of an RFID-based baggage pallet.

## BACKGROUND

With the growth of passenger traffic in civil airports, the number of pieces of passenger baggage to be checked is huge. When it is necessary to review the X-ray machine images of the baggage that have been checked, the field staff need to spend a lot of time and energy to check by memory and monitoring, at present, the corresponding binding of the X-ray machine images of the checked baggage and the baggage objects of passenger is made possible by the RFID-based baggage pallets, which improves the reviewing efficiency. The tracking binding of the RFID-based baggage pallet is a technical method and means for an intelligent passenger security system to implement such a key function of achieving the binding of the X-ray image to the baggage objects, and is the key technical point of the intelligent passenger system. But in the prior art, the way of realizing the corresponding binding of X-ray image to the baggage pallet in accordance with the sequence may cause wrong binding once an abnormal situation occurs, it seriously affects the binding accuracy, is not conducive to preparing for reviewing, causes serious interference to the judgment of safe/suspicious baggage, and there are significant potential safety hazards. When the method of the present invention is adopted, the achieved effect is obviously better than similar products, and the method has the characteristics of high reliability and high success rate.

Equipment in the prior art has the following disadvantages: 1. the success rate of tracking binding is low; 2. if the tracking binding is abnormal, the wrong binding will occur, which will seriously affect the security of binding results; 3. the fault-tolerant performance of tracking binding is poor, and once an error occurs, the binding results of multiple baggage pallets will be affected.

## SUMMARY

The present disclosure provides a binding method for space-time tracking of an RFID-based baggage pallet, which overcomes the problems of low success rate, poor safety performance and poor fault tolerance of the prior binding mode. In order to solve the above technical problems, the present disclosure is achieved by the following technical solutions.

A binding system for space-time tracking of a baggage pallet, including: an electronic identification fixed to the baggage pallet; an electronic identification reader disposed at a side of a belt in front of an X-ray machine; a first sensing device S1 provided at a side of the belt between the electronic identification reader and an entrance of the X-ray machine; a second sensing device S2 provided at a side of the belt at a front end S3 of an imaging area inside the X-ray machine; a third sensing device S6 provided at a side of the belt at a rear end S5 of the imaging area inside the X-ray machine; and a processor connected to the electronic identification reader, the first sensing device S1, the second sensing device S2 and the third sensing device S6.

The electronic identification reader comprises an RFID reader, and the electronic identification fixed to the baggage pallet is an RFID tag.

The first sensing device S1, the second sensing device S2 and the third sensing device S6 are photoelectric sensors.

A binding method for space-time tracking of a baggage pallet includes: identifying, by an electronic identification reader, an electronic identification on a baggage pallet N and sending identified pallet information to a processor when the baggage pallet N is conveyed on a belt, the processor at least recording code information corresponding to the electronic identification of the baggage pallet N; continuing convey of the baggage pallet N on the belt, and sending a signal to the processor when a first sensing device S1 detects the baggage pallet N, information recorded at this time by the processor being a record 1; continuing convey of the baggage pallet N on the belt, and sending a signal to the processor when a second sensing device S2 detects the baggage pallet N, information recorded at this time by the processor being a record 2; and determining, by the processor, that the information is the record 1 or the record 2, and time tracking the baggage pallet N by binding imaging of the baggage pallet N in an imaging area of an X-ray machine to a number of the baggage pallet N when the baggage pallet N enters the X-ray machine.

The time tracking the baggage pallet N by binding imaging of the baggage pallet N in an imaging area of an X-ray machine to a number of the baggage pallet N when the baggage pallet N enters the X-ray machine comprises: setting t as a tracking time range of the processor to the baggage pallet N, $T_1$ as a time when a front end of the baggage pallet N enters a front end S3 of an imaging area of the X-ray machine, and $T_2$ as a time when the baggage pallet N completely leaves a rear end S5 of the imaging area of the X-ray machine, then

$$T_1 = \frac{X_1}{V}$$

$$T_2 = \frac{X_1 + X_2 + L}{V} \quad ;$$

and binding the baggage pallet N to an image produced by the X-ray machine in the time range t if $T_1 \leq t \leq T_2$.

The beneficial effects of the present disclosure are as follows.

 1. The success rate of tracking-binding is high, and the baggage pallet is tracked in time and space according to the multiple judgments of transmission speed, running state, photoelectric and RFID sensors.

 2. The abnormal probability of tracking-binding is reduced, only the failure of binding will occur, and there will not be the situation of wrong binding or confused binding of adjacent baggage pallets, which significantly improves the security.

 3. The fault-tolerant performance of tracking-binding is enhanced, as the tracking binding of each baggage pallet is an independent process, the parameters are not affected by each other when the binding is not possible, and the binding results of subsequent baggage pallets will not be affected.

## BRIEF DESCRIPTION OF DRAWINGS

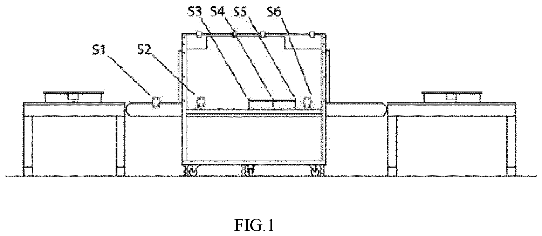

FIG. 1 is a schematic structural diagram of concerned components in the present disclosure.

Reference signs in the drawings: S1- first sensing device, S2- second sensing device, S3- front end of imaging area, S4- center line of imaging area, S5-rear end of imaging area, and S6- third sensing device.

## DESCRIPTION OF THE EMBODIMENTS

The present disclosure will be further explained in conjunction with the drawings and the specific embodiments.

It should be noted that the following detailed description is by way of example and is intended to provide further explanation of the present application. Unless otherwise implied herein, all the terms used herein, which include technical and scientific terms, may have the same technical meaning that is generally understood by a person of ordinary skill in the related art.

It should be noted that the terms used herein are intended to depict the detailed description only and are not intended to limit exemplary embodiments according to the present application. It should also be understood that when used in the description, the terms "comprising" and/or "including" indicate the presence of features, steps, operations, devices, components and/or combinations thereof.

In the description of the present disclosure, it should be understood that, orientation or positional relationships indicated by terms such as "center," "side," "front," and "rear" are based on the orientation or positional relationships shown in the drawings, for ease of description of the present disclosure and simplification of the description only, these terms do not indicate or imply that the apparatus or element referred to must have a specific orientation or be constructed and operated in a specific orientation, and therefore cannot be construed as limitations to the present disclosure. In addition, the terms "first," "second," and "third" are for descriptive purposes only and cannot be construed as indicating or implying relative importance.

The present disclosure provides a binding system and method for space-time tracking of an RFID-based luggage pallet, which overcomes the problems of low success rate, poor safety performance and poor fault tolerance of the prior binding mode.

The system of the present disclosure relates to a device arranged inside an X-ray machine and outside a belt for conveying baggage. As shown in FIG.1, the concerned apparatuses of the present disclosure include a first sensing device S1, a second sensing device S2, a front end S3 of an imaging area, a center line S4 of the imaging area, a rear end S5 of the imaging area, and a third sensing device S6.

It should be noted that the first sensing device, the second sensing device, and the third sensing device can all be the existing photoelectric sensor, laser sensor, and the like, which can achieve the function of sensing an object passing in front of the sensor, and the types of the sensors can be identical or different. The specific type and location are confirmed according to the specific design and implementation process.

In particular, the binding system for space-time tracking of the baggage pallet of the present disclosure at least includes the following (1)-(6).

 (1) An electronic identification fixed to the baggage pallet. The electronic identification is used for storing unique code information for one-to-one correspondence of the baggage pallet and an image of the X-ray machine. The electronic identification includes but is not limited to the existing RFID tag, two-dimensional code or bar code, etc. In the present disclosure, the RFID tag is preferred.

 (2) An electronic identification reader disposed at a side of a belt in front of an X-ray machine. The electronic identification reader is used for identifying the electronic identification fixed on the baggage pallet, the type of which is determined according to the type of the electronic identification. For example, if an RFID tag is used in the present disclosure, the electronic identification reader needs to be an RFID reader.

 (3) A first sensing device S1 provided at a side of the belt between the electronic identification reader and an entrance of the X-ray machine.

 (4) A second sensing device S2 provided at a side of the belt at a front end S3 of an imaging area inside the X-ray machine.

 (5) A third sensing device S6 provided at a side of the belt at a rear end S5 of the imaging area inside the X-ray machine.

 (6) A processor connected to the electronic identification reader, the first sensing device S1, the second sensing device S2 and the third sensing device S6.

As shown in FIG.1, the electronic identification reader includes a first sensing device S1, a second sensing device S2, a front end S3 of an imaging area, a center line S4 of the imaging area, a rear end S5 of the imaging area, and a third sensing device S6, which are arranged in sequence along an advancing direction of baggage pallet, and the baggage pallet passes through the above positions in sequence during the traveling process driven by the belt.

It should be noted that both the X-ray machine and the belt are existing baggage conveying and scanning equipment, and the present disclosure does not improve the same, but only arranges other equipment on the X-ray machine and the belt for implementing the functions of the present disclosure. At the same time, the processor can use the processor of the existing baggage conveying equipment itself, and can additionally use other existing processors.

Based on the binding system for space-time tracking of the baggage pallet, the present disclosure provides a binding method for space-time tracking of a baggage pallet, which includes the following steps 1-5.

Step 1: baggage pallets are placed on a baggage conveyor belt in turn with certain distance(s) therebetween, and are conveyed through the baggage conveyor belt.

Step 2: an electronic identification reader identifies an electronic identification fixed on a baggage pallet N when the baggage pallet N is conveyed on a belt, then sends pallet information stored in the identified electronic identification to a processor, the pallet information at least includes a pallet code $N_{code}$ of the baggage pallet N, and the processor at least records code information corresponding to the electronic identification of the baggage pallet N for binding an image of an X-ray machine and the code information after scanning by the X-ray machine.

Step 3: the baggage pallet N is continuously conveyed on the baggage conveyor belt, when the baggage pallet N is detected by a first sensing device S1 in the immediate vicinity of the electronic reader, the first sensing device S1 starts to send a signal to the processor, and a timer in the processor records the time $t_{k1-Ncode}$ at this time, and if the duration of the signal sent by the first sensing device S1 to the processor exceeds the set time, for example, 200 ms, indicating that the object sensed by the sensing device is a pallet, the processor records the information as record 1, and sets the flag bit $F_{tk1}$ = true.

Step 4: the baggage pallet N is continuously conveyed on the baggage conveyor belt, when the baggage pallet N is detected by a second sensing device S2 in the immediate vicinity of the first sensing device S1, the second sensing device S2 sends a signal to the processor, and a timer in the processor records the time $t_{k2-Ncode}$ at this time, and if the duration of the signal sent by the second sensing device S2 to the processor exceeds the set time, for example, 200 ms, indicating that the object sensed by the second sensing device S2 is a pallet, the processor records the information as record 2, and sets the flag bit $F_{tk2}$ = true.

The set time in the above Steps 3 and 4 refers to the time when the baggage pallet passes through the sensing device. Generally, the setting time is less than the time when the baggage pallet passes through the sensing device from the head to the tail, and more than half of the time when the pallet passes through. When the signal continuously sent by the sensing device exceeds the set time, the object sensed by the sensing device can be considered as the baggage pallet.

Step 5: the processor determines the information of the record 1 and the record 2, if $F_{tk1}$ and $F_{tk2}$ are both true, indicating that the baggage pallet N is about to enter the X-ray machine, at this time, the baggage pallet N continues to be tracked. When the front end S3 of the imaging area detects the baggage pallet N, it sends a signal to the processor and records the time $t_{k3-Ncode}$. After speed and time conversion according to the position of the imaging area, the processor determines that the baggage pallet N is in the imaging area of the X-ray machine, and binds its imaging with the code of the baggage pallet N.

Furthermore, after the first sensing device S1 detects the baggage pallet N, and the signal can be received for a set time such as 200 ms after t $k_{1-Ncode}$ time, according to the continuous passing time signal, it can be determined that the normal baggage pallet passes, instead of abnormal interference such as schoolbags and clothes. For example, in one embodiment, according to the normal baggage pallet size, the continuous passage time signal is 250 ms, and the foreign body interference is mainly clothes dropped from the pallet or schoolbags on the outer edge of the pallet, etc. The continuous passage time signal of such abnormal objects is far less than 250 ms, and record 1 is made; the second sensing device S2 inside the X-ray machine detects the baggage pallet N and eliminates the abnormal interference such as the schoolbag belt according to the continuous passage time, and making a record 2.

Furthermore, in the above steps, the method of conducting time tracking of the baggage pallet N by binding imaging of the baggage pallet N in an imaging area of an X-ray machine to a number of the baggage pallet N when the baggage pallet N enters the X-ray machine is defined as follows.

Firstly, it is known that a belt speed of the X-ray machine is V m/s, a length of the baggage pallet is L m, a distance between the second sensing device S2 inside the X-ray machine and the front end S3 of the imaging area inside the X-ray machine is X1, and the imaging area of the X-ray machine depends on the position of the radioactive source (the range of the area is fixed), that is, a length between the front end S3 and rear end S5 of the imaging area is X2.

T is set as the tracking time of the processor to the baggage pallet N, $t_{k3\text{-}Ncode}$ is the time when the baggage pallet N is about to enter the X-ray machine, and the time from the front edge of the baggage pallet N entering the X-ray machine to arriving at the front end S3 of the imaging area is $T_1$; A time from the front edge of the baggage pallet N entering the X-ray machine until the rear edge of the baggage pallet N leaves the rear end S5 of the imaging area is $T_2$, when the front edge of the baggage pallet enters the imaging area of the X-ray machine until the rear edge of the baggage pallet leaves the imaging area, the system can bind the X-ray image produced by the X-ray machine with the pallet N during this period, and the binding succeeds, the time is recorded as $t_{k\_Ncode}$. Therefore, the range value of tracking time is $T_1 \leq t \leq T_2$, and the baggage pallet will be bound within this tracking time. The calculation formulas of $T_1$ and $T_2$ are as follows:

$$T_1 = \frac{X_1}{V}$$

$$T_2 = \frac{X_1 + X_2 + L}{V}$$

$$t = t_{k\text{-}Ncode} - t_{k3\text{-}Ncode}$$

If t is in the range from $T_1$ to $T_2$, i.e., $T_1 \leq t \leq T_2$, the baggage pallet N and the X-ray machine generated image in the time range t are bound.

To ensure good engineering application effect, eliminate the actual system error, test and collect data on the basis of theoretical calculation value, that is, through experimental test, continuously conveying multiple baggage pallets and record multiple sets of t values and other node times, it is possible to determine the relationship between the actual t value and the theoretical calculation $T_1$ and $T_2$, and then the tracking time correction values $\Delta t_1$ and $\Delta t_2$ can be obtained, and the final range is from $T_1\text{-}\Delta t_1$ to $T_2\text{-}\Delta t_2$.

After the baggage pallet has passed, the pallet N is determined to have passed the X-ray machine when the time range has been exceeded, which will be checked and confirmed by the third sensing device S6 inside the X-ray machine. So far, the whole process of tracking and binding a baggage pallet has been completed.

Since the baggage pallets enter the X-ray machine continuously at a distance, the system supports the simultaneous tracking and binding of multiple baggage pallets, and the method is consistent with that of a single pallet, which belongs to concurrent processing, and there is no difference in judgment conditions.

In the above steps, for the convenience of statistics, the length between the position of the electronic reader and the position of the first sensing device S1 is generally not more than the length of one pallet. The length between the first sensing device S1 and the second sensing device S2 does not exceed the length of one pallet. The length between the second sensing device S2 and the front end S3 of the imaging area does not exceed the length of one pallet. That is, it is used to basically ensure that the time for the electronic reader recognizing the baggage pallet N is 11, so that the object recognized by each subsequent sensing device in the nearest time from the previous sensing device can be considered as the baggage pallet N.

The principle of the binding method for space-time tracking of the baggage pallet of the present disclosure is as follows: through RFID sensors, photoelectric sensors and other detection means, according to the transmission belt speed, the calculated running time of each stage, based on the system error, detection and judgment record results, friction coefficient and other parameter data, the RFID baggage pallet is tracked and judged in time and space, and whether it reaches the binding area is analyzed, so as to achieve stable and reliable binding results, and accurately bind the X-ray machine image of the baggage pallet with the baggage object, which is convenient for security personnel to check back. According to this method, the success rate and accuracy of binding can be improved, the safety performance can be improved, and the consequences of safety inspection failure caused by wrong binding and wrong binding can be avoided. At the same time, it supports continuous discrimination and independent operation, which improves fault tolerance and will not affect other subsequent tracking binding processes. It has good application and popularization value.

The foregoing is merely illustrative of the preferred embodiments of the present application and is not intended to be limiting of the present application, and various changes and modifications may be made by those skilled in the art. Any modifications, equivalent substitutions, improvements, and the like within the spirit and principles of the application are intended to be included within the scope of the present application.

While specific embodiments of the present disclosure have been described above in conjunction with the accompanying drawings, however, it is not a limitation on the protection scope of the present disclosure, and it will be appreciated by those skilled in the art that various modifications or deformations that can be made on the basis of the technical solution of the present disclosure by those skilled in the art without creative labor are still within the protection scope of the present disclosure.

**Claims**

1. A binding system for space-time tracking of a baggage pallet, **characterized in** comprising:

an electronic identification fixed to the baggage pallet;

an electronic identification reader disposed at a side of a belt in front of an X-ray machine;

a first sensing device (S1) provided at a side of the belt between the electronic identification reader and an entrance of the X-ray machine;

a second sensing device (S2) provided at a side of the belt at a front end (S3) of an imaging area inside the X-ray machine;

a third sensing device (S6) provided at a side of the belt at a rear end (S5) of the imaging area inside the X-ray machine; and

a processor configured connected to the electronic identification reader, the first sensing device (S1), the second sensing device (S2) and the third sensing device (S6).

2. The system according to claim 1, **characterized in that**:

the electronic identification reader comprises an RFID reader, and the electronic identification fixed to the baggage pallet is an RFID tag.

3. The system according to claim 1, **characterized in that**:

the first sensing device (S1), the second sensing device (S2) and the third sensing device (S6) are photoelectric sensors.

4. A method applicable to the system according to any one of claims 1 to 3, **characterized in** comprising:

identifying, by an electronic identification reader, an electronic identification on a baggage pallet N and sending identified pallet information to a processor when the baggage pallet N is conveyed on a belt, the processor at least recording code information corresponding to the electronic identification of the baggage pallet N;

continuing convey of the baggage pallet N on the belt, and sending a signal to the processor when a first sensing device (S1) detects the baggage pallet N, information recorded at this time by the processor being a record 1;

continuing convey of the baggage pallet N on the belt, and sending a signal to the processor when a second sensing device (S2) detects the baggage pallet N, information recorded at this time by the processor being a record 2; and

determining, by the processor, that the information is the record 1 or the record 2, and time tracking the baggage pallet N by binding imaging of the baggage pallet N in an imaging area of an X-ray machine to a number of the baggage pallet N when the baggage pallet N enters the X-ray machine.

5. The binding method for space-time tracking of a baggage pallet according to claim 4, **characterized in that**:

the time tracking baggage pallet N by binding imaging of the baggage pallet N in an imaging area of an X-ray machine to a number of the baggage pallet N when the baggage pallet N enters the X-ray machine comprises:

setting t as a tracking time range of the processor to the baggage pallet N, $T_1$ as a time when a front end of the baggage pallet N enters a front end (S3) of an imaging area of the X-ray machine, and $T_2$ as a time when the baggage pallet N completely leaves a rear end (S5) of the imaging area of the X-ray machine, then

$$T_1 = \frac{X_1}{V}$$

$$T_2 = \frac{X_1 + X_2 + L}{V}$$

; and

binding the baggage pallet N to an image produced by the X-ray machine in the time range t if $T_1 \le t \le T_2$.

6. The binding method for space-time tracking of a baggage pallet according to claim 5, **characterized in** further comprising:

continuously calculating time required for a plurality of baggage pallets to pass through each node to obtain tracking time correction values of $\Delta t_1$ and $\Delta t_2$, so that a final range value range is $T_1 - \Delta t_1 \le t \le T_2 - \Delta t_2$.

FIG.1

## INTERNATIONAL SEARCH REPORT

International application No.

**PCT/CN2021/103774**

| A. | CLASSIFICATION OF SUBJECT MATTER |
|---|---|

G06K 7/00(2006.01)i

According to International Patent Classification (IPC) or to both national classification and IPC

| B. | FIELDS SEARCHED |
|---|---|

Minimum documentation searched (classification system followed by classification symbols)

G06K 7/-

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 行李, 托盘, 追踪, 电子标识, X光机, 感应器, 传感器, 时间, luggage, tray, track, electronic identifier, RFID, X-ray machine, sensor, time

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 107527081 A (CHONGQING MICROID TECHNOLOGY CO., LTD.) 29 December 2017 (2017-12-29)<br>entire document | 1-6 |
| A | CN 104502368 A (NUCTECH COMPANY LIMITED et al.) 08 April 2015 (2015-04-08)<br>entire document | 1-6 |
| A | US 2014003575 A1 (DISNEY ENTERPRISES, INC.) 02 January 2014 (2014-01-02)<br>entire document | 1-6 |
| PX | CN 111950304 A (713TH RESEARCH INSTITUTE OF CSIC et al.) 17 November 2020 (2020-11-17)<br>Claims 1-6 | 1-6 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2021** | **12 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

International application No.

**PCT/CN2021/103774**

| Patent document cited in search report | | | Publication date (day/month/year) | Patent family member(s) | | | Publication date (day/month/year) |
|---|---|---|---|---|---|---|---|
| CN | 107527081 | A | 29 December 2017 | None | | | |
| CN | 104502368 | A | 08 April 2015 | BR | 102015032643 | A2 | 05 July 2016 |
| | | | | US | 2016189096 | A1 | 30 June 2016 |
| | | | | US | 10275734 | B2 | 30 April 2019 |
| | | | | RU | 2015154788 | A | 26 June 2017 |
| | | | | CN | 104502368 | B | 23 November 2018 |
| | | | | AU | 2015275228 | A1 | 14 July 2016 |
| | | | | EP | 3040741 | A1 | 06 July 2016 |
| | | | | JP | 6162208 | B2 | 12 July 2017 |
| | | | | RU | 2626660 | C2 | 31 July 2017 |
| | | | | AU | 2015275228 | B2 | 01 June 2017 |
| | | | | JP | 2016126014 | A | 11 July 2016 |
| | | | | HK | 1209183 | A1 | 24 March 2016 |
| US | 2014003575 | A1 | 02 January 2014 | US | 9074984 | B2 | 07 July 2015 |
| | | | | US | 2013069759 | A1 | 21 March 2013 |
| | | | | US | 8564401 | B2 | 22 October 2013 |
| CN | 111950304 | A | 17 November 2020 | None | | | |